Europäisches Patentamt

European Patent Office

Office européen des brevets

(11) Publication number: **0 093 588**
**B1**

(12) **EUROPEAN PATENT SPECIFICATION**

(45) Date of publication of patent specification: **13.08.86**

(21) Application number: **83302418.5**

(22) Date of filing: **28.04.83**

(51) Int. Cl.⁴: **B 60 T 13/14**

(54) **Boosted hydraulic braking system.**

(30) Priority: **28.04.82 GB 8212243**

(43) Date of publication of application:
**09.11.83 Bulletin 83/45**

(45) Publication of the grant of the patent:
**13.08.86 Bulletin 86/33**

(84) Designated Contracting States:
**DE FR GB**

(56) References cited:
**GB-A-1 017 500**
**GB-A-1 333 050**

(73) Proprietor: **CLAYTON DEWANDRE COMPANY LIMITED**
**P.O. Box 9 Titanic Works**
**Lincoln, LN5 7JL (GB)**

(72) Inventor: **Keegan, Colin M. P.**
**30 Moor Lane**
**Mertin Lincoln LN4 3RB (GB)**

(74) Representative: **Hartley, David et al**
**c/o Withers & Rogers 4 Dyer's Buildings Holborn**
**London, EC1N 2JT (GB)**

Courier Press, Leamington Spa, England.

EP 0 093 588 B1

## Description

This invention relates to a boosted hydraulic braking system for vehicles.

Braking systems are known which comprise a booster and a master cylinder and wherein a servo device magnifies the actuating pedal displacement as well as the input effort whereby, in the event of failure of the servo power, the brakes can be applied or operated without excessive pedal effort. Our earlier British Patent specification No. 1,333,050 describes a booster particularly suitable for the actuation of a braking system incorporating two independent sets of brakes. A single master cylinder controls a full power valve which provides pressurised fluid from an accumulator to actuate one set of brakes and also to boost the master cylinder output to actuate a second set of brakes. The boosting is arranged so as to reduce both the load and the travel of the brake pedal (which operates the master cylinder) thus allowing a longer travel and hence a better mechanical advantage in the event of power failure when the master cylinder output directly operates one set of brakes. In order to provide equal presssure to the two circuits the construction requires to be relatively complex. The boost piston has a diameter greater than the diameter of the piston rod, and is operable to produce a boosted pressure equal to the full power pressure.

One object of the present invention is to provide a dual circuit hydraulic braking system of the above kind in which the pressure outputs are not balanced; one circuit, being a full power circuit, operating at a higher pressure than the other circuit which is a boosted circuit.

According to the present invention a boosted dual hydraulic braking system comprises a pedal actuated master cylinder and a booster, one braking circuit being actuated by a full power system under the control of valve means operable by the master cylinder and the other braking circuit being actuated by the boosted output of the master cylinder, e.g. as is disclosed in GB—A—1,333,050, the system being characterised in that the pressure-responsive member of the booster are so dimensioned and arranged that the boosted output pressure at any given time is lower than, and in the preferred embodiment a constant proportion of, that of the full power system.

The dual circuit braking system may be split vertically or horizontally.

A particularly advantageous application is that of the typical modern passenger car, having a vertically split braking system, one circuit feeding front disc brakes and the other feeding rear disc or drum brakes. It is possible to increase the working pressure in the front disc brake circuit without altering the pressure in the rear brake circuit by means of this invention. This enables the pistons in the front disc calipers, or the discs themselves, to be reduced in diameter, leading to space and weight saving. Such an increased pressure can lead to increased compliance in the front brake hoses, which could give excessive pedal travel with a conventional boosted system. By using full power pressure in the front circuit, (from the accumulator, metered by the power valve), this increased compliance is not significant. The rear brakes are operated at a lower pressure by the boosted circuit, so that compliance and hence pedal travel are reduced

Thus one advantage of this invention is that it allows the front disc brake and caliper assemblies to be reduced in size by operating at higher pressure, whilst retaining the lower pressure for the rear brakes and thus avoiding excessive compliance. Furthermore, as rear brakes generally do less work than front brakes, due to higher static loading of the front axle and also dynamic weight transfer, they tend to be smaller at present, so that this invention could reduce front brakes to the same size as rear brakes, leading to commonality of parts and also enabling wheel sizes to be reduced as the front brake size tends to limit wheel size at present.

Another advantage is that by providing a full power circuit to the front brakes these could be allowed to run hotter as vapourisation of the fluid is far less likely to cause problems with full power than with a conventional hydrostatic circuit. Thus the same brakes could be used front and rear, running at higher pressures and temperatures at the front.

Another advantage of this invention is that it leads to a simplified booster construction. For example, in the dual booster described in British Patent specification 1,333,050, the booster piston may be simplified so that the full power pressure acts on the piston rod area and the piston itself can now be dispensed with, together with the close tolerance which would otherwise be required to achieve boosted output pressure equal to the full power pressure, leading to substantial cost, weight and space saving.

Accordingly, we propose according to a further feature of this invention, a booster for a dual hydraulic braking system, comprising a servo or boost piston actuated by pressure fluid in the full power system and adapted, in response to said pressure, to abut and displace an output piston element which is simultaneously responsive, to produce the boosted output actuating the other braking circuit, to the pressure generated by the master cylinder acting on an annular region thereof surrounding the area engaged by the boost piston, wherein the area engaged by the boost piston is equal to the area thereof acted on by the pressure in the said full power circuit.

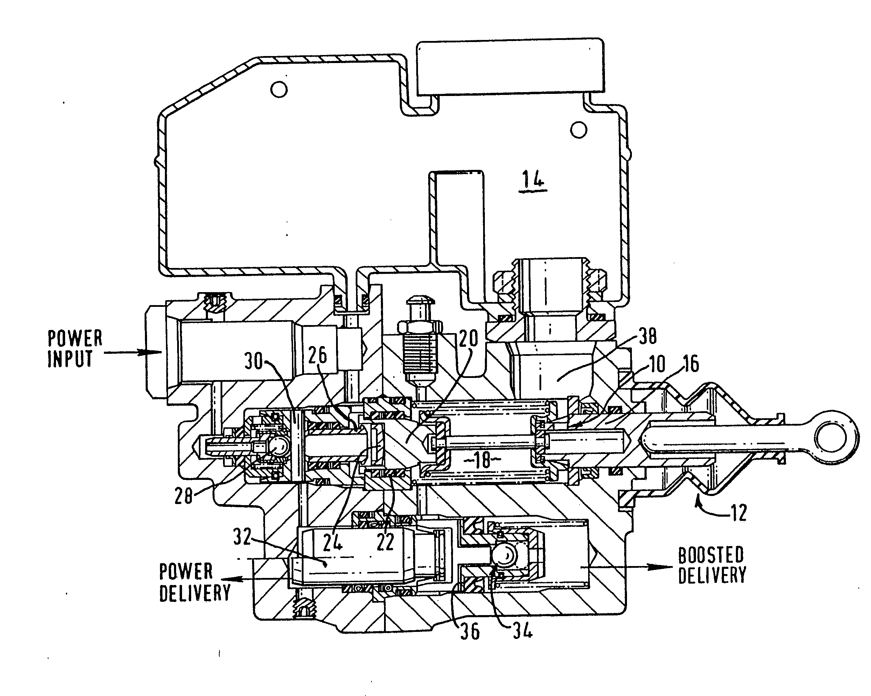

An embodiment of the present invention will now be described by way of example with reference to the accompanying drawing which is a cross-section of a dual hydraulic biased booster for a braking system incorporating two independent biased sets of brakes and utilising a power source for the direct actuation of one set of brakes.

The booster shown in the drawing includes a master cylinder 10 which is pedal actuated through a suitable connection 12 and in communication with a reservoir 14 for hydraulic fluid.

When master cylinder piston 16 is moved to the left, the captive spring assembly 18 moves with it. The spring load is sufficient to move an input plunger 20 through its O-ring 22 until exhaust seat 24 contacts the stirrup 26.

The stirrup assembly then moves to the left, thus freeing the ball 28 previously trapped, by the load of the spring 39 outside the stirrup, between the inlet seat and a stationary pin 30. The power input fluid can now enter the valve delivery chamber, defined by the exhaust seat 24, and the O-ring seal within which the stirrup slides. This creates a load which acts to push back the input plunger 20.

This initial operation of the power valve by means of the pre-loaded spring is known as valve "crack-off", its function being to provide an initial pressure to move the boost piston 32 so that the recuperating valve 34 is closed. Any back pressure generated in the master cylinder 10 by this movement of the boost 32 and output 36 pistons is dissipated through a tilt valve 38 (not shown but fitted in this region) communicating with the master cylinder reservoir.

Further leftward movement of the master piston 16 closes the tilt valve 38 and pressure is built-up in the master cylinder 10. This pressure acts on the input plunger 20 and opposes the load due to the power delivery pressure. Increasing load on the master piston 16 now raises the manual pressure and correspondingly moves the input plunger 20 to open the power valve again until a new balance point is reached when the full power delivery force acting on the plunger 20 via the stirrup 26 equals the manual (master cylinder) force and the stirrup 26 moves back to trap the inlet ball 28 on its seat, against the pin 30, thus preventing further pressure entering the delivery chamber. Reduction of manual pressure leads to lifting of the exhaust seat 24 and a corresponding reduction of the delivery pressure.

The power delivery pressure which is applied to one of the brake circuits (via an outlet port, not shown), also acts on the boost piston to push the output piston, with the help of the manual pressure over an annular area, to produce a boosted output pressure, which is applied to the other brake circuit.

If the captive spring assembly 18, (known as the "nudge" spring), is omitted the power valve cannot be operated until pressure is generated in the master cylinder 10, which means the tilt valve 38 must be closed. Initial movement of the boost piston 32 displaces fluid through the recuperating valve 34 in the output piston 36 and this displacement goes into the master cylinder 10, causing a sudden pressure increase which is felt as a kick-back on the pedal. The nudge spring is to prevent this kick-back by ensuring this initial displacement pulse takes place whilst the tilt valve 38 is still open, allowing the fluid to go to the reservoir, without generating appreciable pressure. As soon as the recuperating valve 34 has shut the displacement ceases and the tilt valve 38 can then be closed.

In the conventional booster described in GB—A—1,333,050 the boosted output pressure is made equal to (balanced by) the full power pressure by appropriate selection of the effective areas upon which pressure act. In particular, the boost piston is made larger in diameter than the piston rod.

The booster of this invention has a much simplified construction, the area of the boost piston 32 on which the full power pressure acts being equal to the are of the opposite end of the boost piston 32 which bears upon the larger diameter output piston 36 to produce a boosted delivery at a pressure lower than that of the power delivery.

## Claims

1. A boosted dual hydraulic braking system comprising a pedal actuated master cylinder (10) and a booster (32, 36), one braking circuit being actuated by a full power system under the control of valve means (20, 24, 26, 28) operable by the master cylinder and the other braking circuit being actuated by the boosted output of the master cylinder (10), characterised in that the pressure responsive members (32, 36) of the booster are so dimensioned and arranged that the boosted output pressure at any given time is lower than that of the full power system.

2. A braking system according to claim 1 wherein the pressures in the two circuits are maintained at a constant ratio.

3. A braking system according to claim 1 or claim 2, and which is split vertically, the circuit actuated by the full power system feeding the front brakes and the other circuit feeding the rear brakes of a vehicle.

4. A braking system according to any one of the preceding claims wherein the booster comprises a servo or boost piston (32) actuated by pressure fluid in the full power system and adapted, in response to said pressure, to abut and displace an output piston element (36) which is simultaneously responsive, to produce the boosted output actuating the other braking circuit, to the pressure generated by the master cylinder (10) acting on an annular region thereof surrounding the area engaged by the boost piston (32), wherein the area engaged by the boost piston (32) is equal to the area thereof acted on by the pressure in the said full power circuit.

## Patentansprüche

1. Verstärktes hydraulisches Zweikreisbremssystem mit einem von einem Pedal betätigten Hauptzylinder (10) und einem Bremskraftverstärker (32, 36), wobei ein Bremskreis unter dem Einfluß eines von dem Hauptzylinder betätigten Ventiles (20, 24, 26, 28) durch ein System für die volle Bremskraft betätigt wird und der andere Bremskreis durch die verstärkte Ausgangskraft des Hauptzylinders (10) betätigt wird, dadurch gekennzeichnet, daß die druckabhängigen Glieder (32, 36) des Bremskraftverstärkers so bemessen und angeordnet sind, daß die verstärkte Ausgangskraft zu jedem vorgegebenen Zeitpunkt geringer als die des Systems für die volle Bremskraft ist.

2. Bremssystem nach Anspruch 1, bei dem die Drücke in den beiden Bremskreisen in einem konstanten Verhältnis zueinander gehalten sind.

3. Bremssystem nach Anspruch 1 oder Anspruch 2, das vertikal unterteilt ist, so daß der vom System für die volle Bremskraft betätigte Bremskreis auf die Vorderradbremsen, der andere Bremskreis auf die Hinterradbremsen eines Fahrzeuges einwirkt.

4. Bremssystem nach einem der vorhergehenden Ansprüche, bei dem der Bremskraftverstärker einen Servo-oder Verstärkungskolben (32) aufweist, der vom Fluiddruck im System für die volle Bremskraft betätigt wird und dazu bestimmt ist, unter dem Einfluß dieser Bremskraft an einem Ausgangskolbenelement (36) anzustoßen und dieses zu verstellen, das zur Erzeugung einer verstärkten Ausgangskraft, die den anderen Bremskreis verstärkt, gleichzeitig auf den Druck anspricht, der vom Hauptzylinder (10) erzeugt wird und auf einen ringförmigen Bereich desselben einwirkt, der den Bereich umgibt, der von dem Verstärkungskolben (32) beeinflußt wird, wobei der von dem Verstärkungskolben (32) beeinflußte Bereich gleich dem Bereich desselben ist, auf den der Druck im Bremskreis für die volle Bremskraft einwirkt.

**Revendications**

1. Systèmes double de freinage hydraulique amplifié comprenant uen pédale agissant sur un maître cylindre (10) et un supresseur (32, 36), un circuit de freinage étant mis en fonctionnement par un système de puissance sous le contrôle de moyens formant soupapes (20, 24, 26, 28) et pouvant être commandés par le maître cylindre, l'autre circuit de freinage étant mis en fonctionnement par la sortie amplifiée du maître cylindre (10), ledit système étant caractérisé en ce que les organes réagissant à la pression (32, 36) du surpresseur sont disposés et ont des caractéristiques dimensionnelles telles que la pression de sortie amplifiée est, en permanence, inférieure à celle délivrée par le système de puissance.

2. Système de freinage selon la revendication 1, dans lequel les pressions dans les deux circuits sont maintenues dans un rapport constant.

3. Système de freinage selon la revendication 1 ou la revendication 2, divisé verticalement, le circuit commandé par le système de puissance alimentant les freins avant et l'autre circuit limentant les freins arrière d'un véhicule.

4. Système de freinage selon l'une quelconque des revendications précédentes, dans lequel le surpresseur comprend un servo-piston ou piston à action amplifiée (32) commandé par un fluide sous pression dans le système de puissance et adapté, en réponse à ladite pression, pour venir en butée et déplacer un organe formant piston de distribution (36), qui, pour produire la distribution amplifiée commandant l'autre circuit de freinage, réagit simultanément à la pression générée par le maître cylindre (10) agissant sur une partie annulaire de celui-ci entourant la surface occupée para le piston à action amplifiée (32), dans lequel la surface accupée par le piston à action amplifiée (32) est égale à la surface de celui-ci sur laquelle agit la pression dans ledit circuit de puissance.